# EUROPEAN PATENT SPECIFICATION

(11) **EP 2 564 556 B1**
(45) Date of publication and mention of the grant of the patent: **03.06.2020**
(21) Application number: 11778077.5
(22) Date of filing: 29.04.2011
(51) Int. Cl.: H04L 12/24, H04L 12/911, H04L 12/927, H04W 80/04, H04L 12/14, H04L 12/26, G06Q 30/04, H04M 15/00

(54) **MOBILE DEVICE BANDWIDTH THROTTLING**
DROSSELUNG DER BANDBREITE MOBILER VORRICHTUNGEN
RALENTISSEMENT DE LA BANDE PASSANTE DE DISPOSITIF MOBILE

(30) Priority: 29.04.2010 US 770563
(43) Date of publication of application: 06.03.2013
(73) Proprietor: T-Mobile USA, Inc., Bellevue, WA 98006 (US)
(72) Inventor: SHAH, Mehul, Jayant, Bellevue, WA 98006 (US); GODDIPATI, Gopala, Krishna, Bellevue, WA 98006 (US)
(74) Representative: Bosch Jehle Patentanwaltsgesellschaft mbH
(86) International application number: PCT/US2011/034679
(87) International publication number: WO 2011/139923

(56) References cited:
- US-A1- 2004 199 667
- US-A1- 2008 263 632
- US-A1- 2008 305 779
- US-A1- 2008 318 562

## Description

### BACKGROUND

Generally described, computing devices and communication networks facilitate the collection and exchange of information. Utilizing a communication network and relevant communication protocols, a computing device can engage in data communications with a wide variety of computing devices. In accordance with a telecommunications-based environment, telecommunications-based devices, such as mobile terminals, establish communications with gateway computing devices via a wireless communication network. The gateway computing devices provide data communication to data networks, such as the local area network or wide area networks (e.g., the Internet).

Typically, a service provider maintains the wireless access communication network and gateway computing device for telecommunications-based devices that are associated with subscribers/customers of the service provider, often referred to as a home network. Additionally, multiple service providers have business relationships that allow telecommunications-based devices that are not associated with subscribers/customer of the particular service provider to use a foreign/visitor radio access network to access other data networks. The non-subscribers telecommunications-based devices are often referred to as roaming telecommunications-based devices from the perspective of the service provider and the wireless communication network are often referred to as visiting networks/foreign networks from the perspective of the non-subscriber telecommunications-based device.

Subscriber telecommunications-based devices are often configured with software applications, configurations, or other settings that may specify various aspects of usage of the communication networks, including an identification which gateway computing devices will be utilized to provide communications and data usage policies. For example, a service provider may have different pricing plans for subscribers that dictate amounts of data that may be transmitted via the service provider's network. In another example, the service provider can provide different guaranteed levels of service, such as throughput rates, based on pricing plans and amounts of data transmitted via the service provider's network.

Prior art document US 2008/305779 describes a method and system for managing communications associated with a mobile device, comprising usage policies determination.

### BRIEF DESCRIPTION OF THE DRAWINGS

The foregoing aspects and many of the attendant advantages of the present disclosure will become more readily appreciated as the same become better understood by reference to the following detailed description, when taken in conjunction with the accompanying drawings, wherein:
FIGURE 1 is a block diagram illustrative of a telecommunication environment including a number of telecommunication devices and gateway computing devices;
FIGURE 2 is a block diagram illustrative of components of a telecommunication device for use the generation, management and display of group-based information;
FIGURES 3A-3C are block diagrams of the telecommunication environment of FIGURE 1 illustrating an embodiment for the tracking of mobile device data usage and modification of network policies corresponding to data usage;
FIGURES 4A-4C are block diagrams of the telecommunication environment of FIGURE 1 illustrating another embodiment for the tracking of mobile device data usage and modification of network policies corresponding to data usage;
FIGURE 5 is a flow diagram illustrative of a data usage processing routine implemented by a gateway computing device in a telecommunication environment;
FIGURE 6 is a flow diagram illustrative of an exceeded data threshold sub-routine implemented by a gateway computing device; and
FIGURE 7 is a flow diagram illustrative of a data usage processing routine implemented by a gateway computing device in a telecommunication environment;

### SUMMARY

The present invention is carried out as defined in the appended claims.

### DETAILED DESCRIPTION

Generally described, aspects of the present disclosure relate to the management of communications related to telecommunications-based devices. In an illustrative embodiment, gateway computing devices corresponding to a radio communication network can modify the policies associated with telecommunications-based devices as a function of the usage of the radio communication network. In an illustrative embodiment, the modification of the policies corresponds to monitoring of telecommunications-based device data usage and comparing the monitored data usage with data usage thresholds. In another illustrative embodiment, the modification of the policies corresponds to monitoring telecommunications-based device data usage and adjusting data usage quotas. The resulting modification can limit the throughput of data, prevent additional data requests, or modify different aspect of the data communications via the radio communication network.

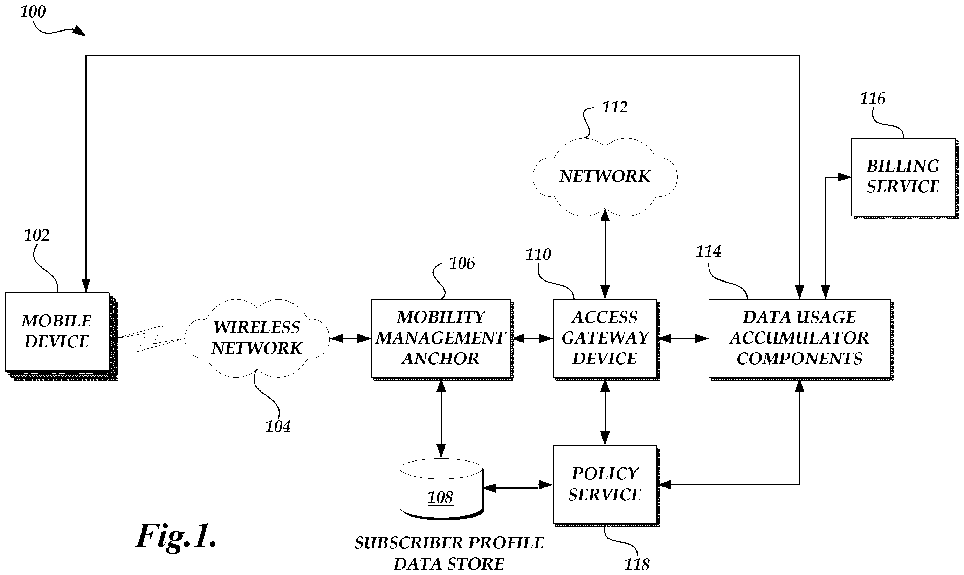

Although aspects of the present disclosure will be described with regard to an illustrative telecommunication environment and component interactions, communication protocols and flow diagrams, one skilled in the relevant art will appreciate that the disclosed embodiments are illustrative in nature and should not be construed as limiting. The systems and methods in the present disclosure may utilize various communication protocols, including various addressing protocols. Additionally, although the term telecommunication device is used in this document, the term represents any type of device having a component for communicating with one or more other devices via one or more communication paths. Such communication paths can include wireless communication paths (via infra-red, RF, optical, terrestrial, or satellite communication media) and wired communication paths. Still further, although the present disclosure references a telecommunications-based device, one skilled in the relevant art will appreciate that a telecommunications-based device may also be referred to as a wireless computing device, a mobile communication device, a mobile terminal, or a computing device. Examples of telecommunication devices are described below with regard to FIGURE 1. Accordingly, reference to a telecommunication device should not be interpreted as including any particular functionality or operation not described in the present disclosure.

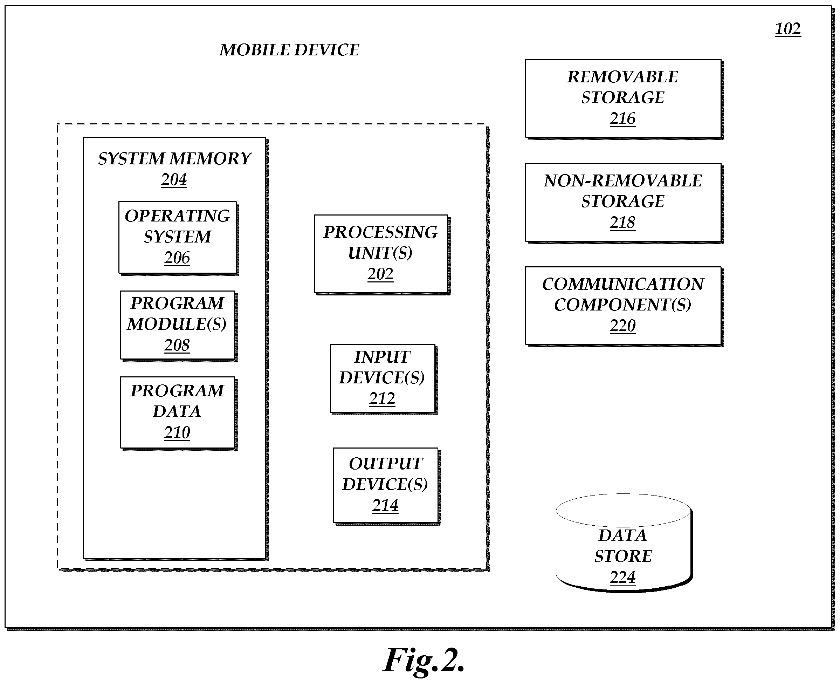

With reference now to FIGURE 1, an embodiment of an illustrative telecommunication environment 100 will be described. The telecommunication device communication environment 100 can include a number of telecommunications-based device 102 associated with a user. The telecommunications-based device 102 can correspond to a wide variety of devices or components that are capable of initiating, receiving or facilitating communications over a radio communication network 104 including, but not limited to, personal computing devices, electronic book readers (e.g., e-book readers), hand held computing devices, integrated components for inclusion in computing devices, home electronics, appliances, vehicles, machinery, landline telephones, network-based telephones (e.g., voice over IP ("VoIP"), cordless telephones, cellular telephones, smart phones, modems, personal digital assistants, laptop computers, gaming devices, media devices, and the like. In an illustrative embodiment, the telecommunications-based device 102 include a wide variety of software and hardware components for establishing communications over one or more communication networks, including wireless communication network 104 or a wired communication network (not shown). Illustrative components of a telecommunications-based device 102 will be described in greater detail with regard to FIGURE 2.

With continued reference to FIGURE 1, in communication with the telecommunications-based devices 102 are a number of computing devices, generally referred to as gateway computing devices. Specifically, as illustrated in FIGURE 1, the gateway computing devices can include a mobility management anchor computing device 106 for obtaining requests for connectivity to communication networks from telecommunications-based devices 102 via the wireless communication network 104. Illustratively, the mobility management anchor computing device 106 may correspond to a Mobility Management Entity ("MME") key control node as specified for the Long Term Evolution ("LTE") air interface protocol. In another example, the mobility management anchor computing device 106 may correspond to the Serving GPRS Support Node ("SGSN") node in accordance with the General Packet Radio Service ("GPRS") and Universal Mobile Telecommunications System ("UMTS") air interface protocols. One skilled in the relevant art will appreciate that the mobility management anchor computing device 106 is not limited to any specific structure or component of any one air interface protocol.

In an illustrative embodiment, the mobility management anchor computing device 106 can maintain data, such as in the form of data tables, that facilitate the static provisioning of specific gateway computing devices, such as access gateway devices, to telecommunications-based devices 102. The mobility management anchor computing device 106 can also maintain security data that facilitates the authentication and authorization of telecommunications-based devices 102. Specifically, the mobility management anchor computing device 106 can maintain one or more subscriber profile data stores 108 for maintaining the data provisioning gateway computing devices and the security data associated with the telecommunications-based devices 102. The subscriber profile data stores 108 may correspond to a single data store or a set of data stores, maintain either locally or in a distributed manner. Still further, at least some portion of the subscriber profile data stores 108 may correspond to service provider home networks.

The telecommunication device communication environment 100 can further include one or more access gateway computing devices 110 that facilitate, or otherwise provider, data connectivity to the communication network 112. Illustratively, the access gateway computing device 110 can corresponds to Gateway GPRS Support Node ("GGSN") in accordance with the GPRS and UMTS air interface standards. In another example, the access gateway computing device 110 can correspond to the Packet Data Gateway ("PDN") for the LTE air interface standards. However, one skilled in the relevant art will appreciate that the mobility management anchor computing device 106 is not limited to any specific structure or component of any one air interface protocol.

With continued reference to FIGURE 1, in an illustrative embodiment, the telecommunication device communication environment 100 can include data usage accumulator components 114 that are in communication with the access gateway computing devices 110. Illustratively, the data usage accumulator components 114 can include various components/sub-components that can be utilized in conjunction with the processing of data use information corresponding to telecommunications-based devices 102. In one aspect, the data usage accumulator components 114 can include one or more data use collector components for collecting and processing data use records generated by access gateway computing devices 110. In another aspect, the data usage accumulator components 114 can include an accumulator function for grouping processed data use records over a defined period of time (e.g., a billing cycle). In a further aspect, the data usage accumulator components 114 can include a processing component for keeping track of additions/subtractions to data quotas. The data usage accumulator components 114 can further include various interfaces for communicating with the access gateway computing devices 110, telecommunications-based devices 102, and other components of the telecommunication device communication environment 100. Thus, although the data usage accumulator components 114 are illustrated as a single component of the telecommunication device communication environment 100, the data usage accumulator components 114 may include various components or combination of components implemented by multiple computing devices. Additionally, the functionality associated with the data usage accumulator components 114 may be distributed across a communication network, such as a local area network or wide area network.

As illustrated in FIGURE 1, the telecommunication device communication environment 100 can include a billing service component 116 in communication with the data usage accumulator components 114. The billing service component 116 can provide an interface to facilitate the management of subscriber accounts in the event a subscriber has exceeded data thresholds or data quotas. The telecommunication device communication environment 100 further includes a policy service 118 for managing various data, or network, policies. Illustratively, the policy service 118 can modify policies associated with subscribers based on data usage of the telecommunications-based devices 102. The policy service 116 can maintain information regarding current network data policies in the subscriber profile data store 108.

In an illustrative embodiment, the telecommunication device communication environment 100 can include a number of additional components, systems and/or subsystems for facilitating communications with the telecommunications-based devices 102 and/or the mobility management anchor computing device 106, or other devices. The additional components can facilitate wireless communication network 104, such as a cellular radio access network, a wireless network based on the family of IEEE 802.11 technical standards ("WiFi"), a wireless network based on IEEE 802.16 standards ("WiMax"), a converged wireless telecommunication network such as Unlicensed Mobile Access ("UMA"), or General Access Network ("GAN"), and other wireless networks. The operation of mobile communication networks, such as wireless communication network 104 are well known and will not be described in greater detail. Additionally, although the wireless communication network 104 is illustrated as a single communication network, one skilled in the relevant art will appreciate that the communication network can be made up of any number of public or private communication networks and/or network connections.

With reference now to FIGURE 2, illustrative components of a telecommunication device, such as telecommunications-based device 102, for use in the creation and display of group-based information displays will be described. The telecommunications-based device 102 may include one or more processing units 202, such as one or more CPUs. The telecommunications-based device 102 may also include system memory 204, which may correspond to any combination of volatile and/or non-volatile storage mechanisms. The system memory 204 may store information which provides an operating system component 206, various program components 208, program data 210, and other components. The above-enumerated list of components is representative and is not exhaustive of the types of functions performed, or components implemented, by the telecommunications-based device 102. One skilled in the relevant art will appreciate that additional or alternative components may also be included in the telecommunications-based device 102 to carry out other intended functions such as a mobile telephone functions. The telecommunications-based device 102 performs functions by using the processing unit(s) 202 to execute instructions provided by the system memory 204. The telecommunications-based device 102 may also include one or more input devices 212 (keyboard, mouse device, specialized selection keys, etc.) and one or more output devices 214 (displays, printers, audio output mechanisms, etc.).

With continued reference to FIGURE 2, the telecommunications-based device 102 may also include one or more types of removable storage 216 and one or more types of non-removable storage 218. Still further, the telecommunications-based device 102 can include communication components 220 for facilitating communication via wired and wireless communication networks, such as the wireless communication network 104 and data network 118 (FIGURE 1). Examples of various communication protocols include, but are not limited to, Bluetooth, the family of IEEE 802.11 technical standards ("WiFi"), the IEEE 802.16 standards ("WiMax), short message service ("SMS"), voice over IP ("VoIP") as well as various generation cellular air interface protocols (including, but not limited to, air interface protocols based on CDMA, TDMA, GSM, WCDMA, CDMA2000, TD-SCDMA, WTDMA, LTE, OFDMA, and similar technologies).

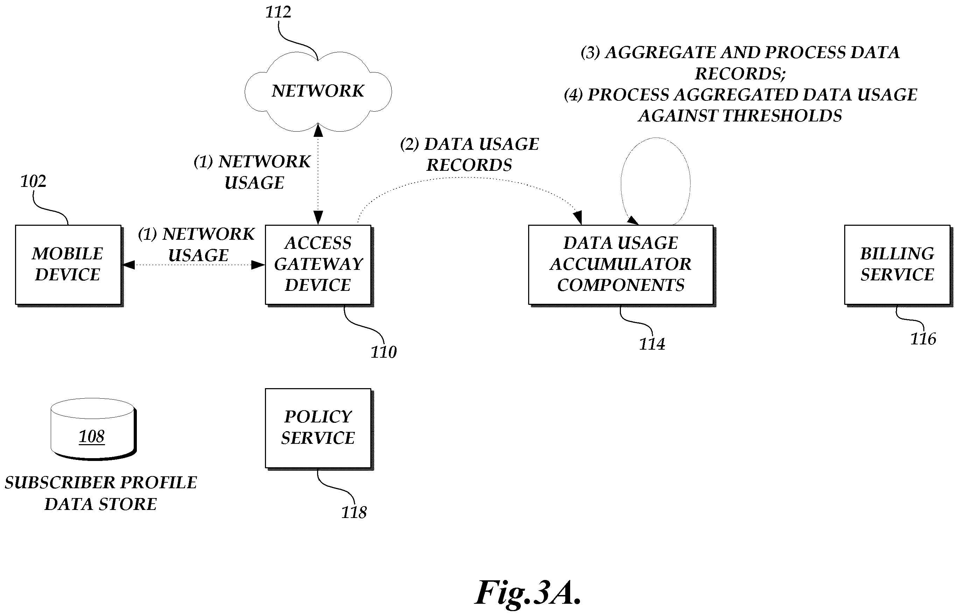

With reference now to FIGURES 3A - 3C, an illustrative example of an embodiment for the management of communications via a telecommunications-based device 102 and a gateway computing device, such as the mobility management anchor computing device 106 and access gateway computing device 110, will be described. With reference to FIGURE 3A, it is assumed that a telecommunications-based device 102 has previously transmitted an initial request to establish communications via the wireless communication network 104. In this traditional embodiment, the request from the telecommunications-based device 102 can correspond to an "Attach Request" transmitted from the telecommunications-based device 102.

Upon receipt of the communication request, the mobility management anchor computing device 106 processes the communication request via information maintained by the subscriber profile data store 108. In one aspect, the subscriber profile data store 108 can provide security information or authentication information utilized by the mobility management anchor computing device 106. In another aspect, the subscriber profile data store 108 can provide the identification of a static list of one or more gateway computing devices, such as access gateway devices 112, that have been previously been associated with the telecommunications-based device 102. The subscription information, including the static list of the one or more gateway computing devices, is maintained by the mobility management anchor computing device 106 for use in processing subsequent communications from the telecommunications-based device 102. For example, the mobility management anchor computing device 106 may verify that any gateway computing devices identified in a subsequent communication request match a gateway computing device identified in the static list. The mobility management anchor computing device 106 then transmits a confirmation or rejection notification to the requesting telecommunications-based device 102

Upon receipt of the notification from the mobility management anchor computing device 106, the telecommunications-based device 102 transmits a second communication request to the mobility management anchor computing device 106 to establish a communication context. In this second request, the telecommunications-based device 102 specifies the identity of one of the gateway communication devices identified subscription information or otherwise configured on the telecommunications-based device 102. Illustratively, the telecommunications-based device 102 is configured with information that identifies one or more gateway computing devices that can be requested.

The mobility management anchor computing device 106 processes the context communication request to determine the network address of the appropriate gateway computing device identified in the context request. For example, the mobility management anchor computing device 106 can verify that the requested gateway computing device matches the list of one or more gateway computing devices the telecommunications-based device 102 can request. If the requested gateway computing device is appropriate for the quest, the mobility management anchor computing device 106 can then utilize the domain name service 110 to resolve the IP address of the identified gateway computing device. Once the mobility management anchor computing device 106 obtains the appropriate information, the mobility management anchor computing device forwards the context request to the appropriate gateway computing device to facilitate communications between the gateway computing device and the telecommunications-based device 102.

As illustrated in FIGURE 3A, the telecommunications-based device 102 accesses various resources via the communication network 112 via the access gateway computing device 110. At regular intervals, the access gateway computing device 110 generates data usage records corresponding to descriptions of the data usage between the telecommunications-based device 102 and the communication network 112. Examples of data usage records include, but are not limited to, Data Call Detail Records ("CDR") and Data Usage Records ("DUR"). The data usage records may be transmitted by the access gateway computing device 110 to the data usage accumulator components 114 via a push or pull model.

In an illustrative embodiment, the data usage accumulator components 114 can process incoming data usage records as they are received to obtain additional information, remove information or modify the measured usage. For example, the data usage accumulator components 114 can filter out any data usage records relating to data in which a subscribe would not be charged or considered against the plan, often referred to as "whitelist" resources. Illustratively, the data usage accumulator components 114 can continue to collect the data records on a per session basis before further processing. Alternatively, the data usage accumulator components 114 can process each data usage record individually. Thereafter, the data usage accumulator components 114 aggregates one or more data usage records over a defined period of time (e.g., a calendar-based period or billing cycle-based period) representative of the cumulative data use for the subscriber. The data usage accumulator components 114 then processes the aggregated data usage records against one or more thresholds maintained by the data usage accumulator components 114. Illustratively, the thresholds may correspond to a service plan/subscription plan associated with the subscriber in which one or more data limits have been defined.

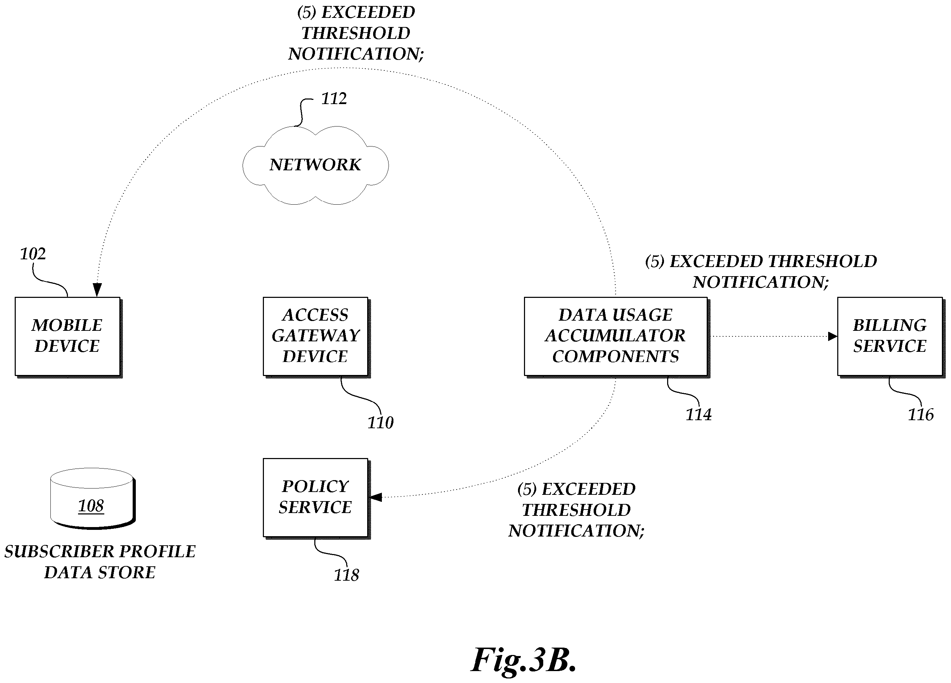

With reference now to FIGURE 3B, in an illustrative embodiment, in the event that the data usage accumulator components 114 determines that one or more thresholds have been exceeded, the data usage accumulator components 114 can generate notifications or initiate additional action. In one aspect, the data usage accumulator components 114 can transmit one or more notifications to the telecommunications-based device 102 to inform the subscriber of the exceeded threshold. For example, the data usage accumulator components 114 can generate an SMS message or e-mail message that is transmitted to the telecommunications-based device 102. In another aspect, the data usage accumulator components 114 can transmit a notification to the billing service 116. Illustratively, the billing service 116 can modify the billings to the subscriber data plan or interface with the subscriber relative to the exceeded threshold. In a further aspect, the data usage accumulator components 114 can transmit a notification to, or otherwise initiate, the policy service 118 to modify the data access policy associated with the subscriber. For example, the policy service 118 may update a configuration to the access gateway computing device 110 to limit the data bandwidth made available to the telecommunications-based device 102.

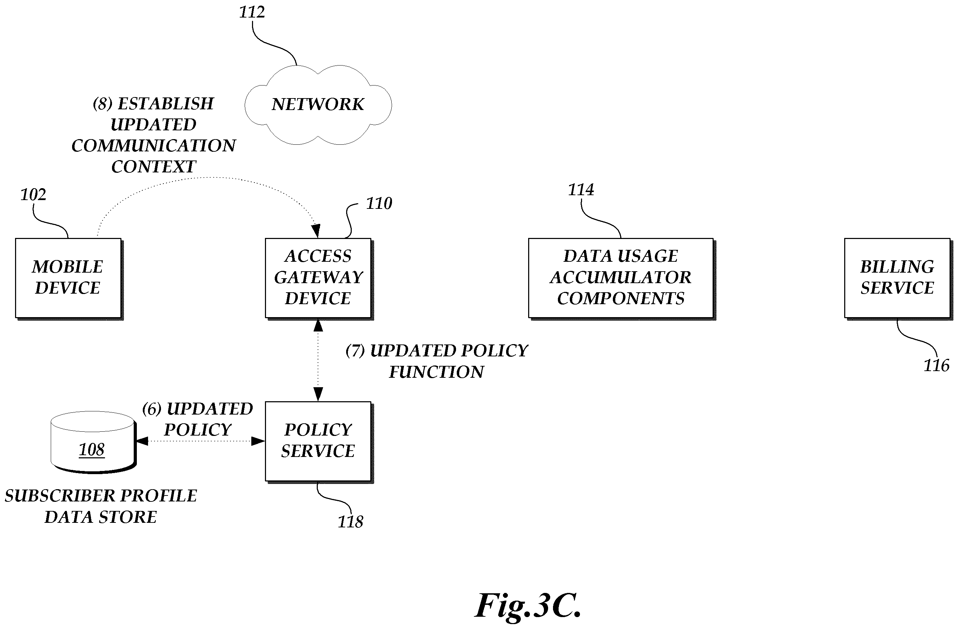

With reference now to FIGURE 3C, the policy service 118 processes the notification (or initiation request) from the data usage accumulator components 114. The policy service 118 can access the current subscriber data policy that was used to establish the current communication context and modify the data policy to reflect the exceeding of the data threshold. The policy service 118 then causes the updated policy to be transmitted to an appropriate access gateway computing device 110 for implementation. Thereafter, the receiving access gateway computing device 110 can request that the telecommunications-based device 102 re-transmit the context request to the mobility management anchor computing device 106 to allow the access gateway computing device 110 to implement the updated policy. One skilled in the relevant art will appreciate that additional or alternative methodologies for implementing policy changes may also be implemented.

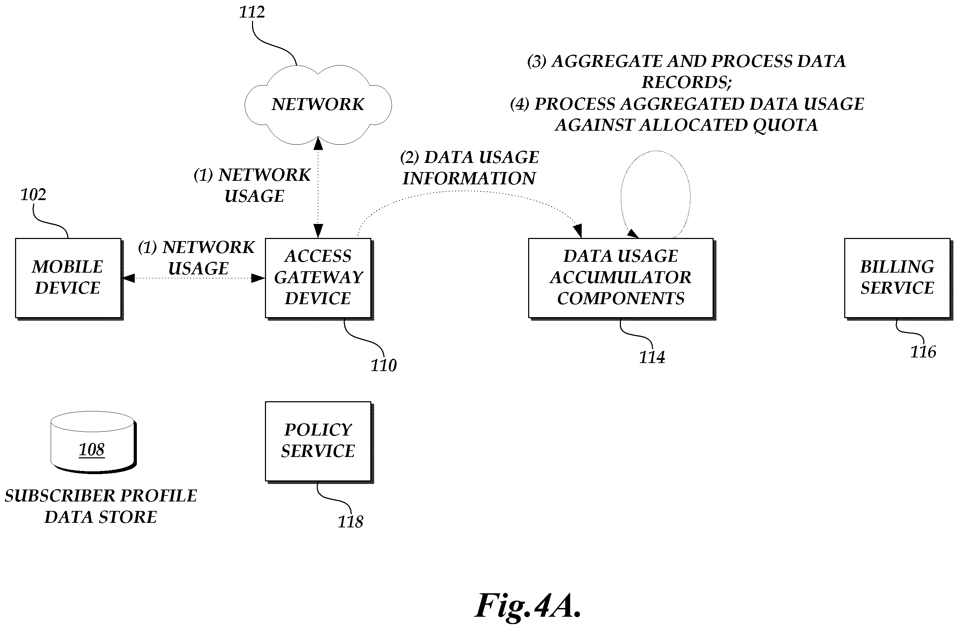

With reference now to FIGURES 4A - 4C, an illustrative example of another embodiment for the management of communications via a telecommunications-based device 102 and a gateway computing device, such as the mobility management anchor computing device 106 and access gateway computing device 110, will be described. Similar to the discussion with regard to FIGURE 3A, it is assumed that a telecommunications-based device 102 has previously transmitted an initial request to establish communications via the wireless communication network 104 and established a communication context. In the embodiment discussed with regard to FIGURE 4A - 4C, it will be assumed that the subscription plan relates to data quotas that relate to authorized amounts of data transmissions (typically measured by data amounts).

As illustrated in FIGURE 4A, the telecommunications-based device 102 accesses various resources via the communication network 112 via the access gateway computing device 110. At regular intervals, the access gateway computing device 110 transmits data usage information corresponding to descriptions of the data usage between the telecommunications-based device 102 and the communication network 112. The data usage information may be transmitted by the access gateway computing device 110 to the data usage accumulator components 114 via a push or pull model. Illustratively, the access gateway computing device 110 can transmit data usage records (as described above) for semi-real time reporting or transmit usage data via a communication protocol (in lieu of the generation and transmission of data records).

In an illustrative embodiment, the data usage accumulator components 114 can process incoming data usage information to obtain additional information, remove information or modify the measured usage. For example, the data usage accumulator components 114 can filter out any data usage records relating to data in which a subscribe would not be charged or considered against the plan, often referred to as "whitelist" resources. Illustratively, the data usage accumulator components 114 can processes each data usage information individually as the information is provided by the access gateway computing device 110. In this illustrative embodiment, the data usage accumulator components 114 then processes the aggregated data usage information against one or more data usage quotas maintained by the data usage accumulator components 114. Illustratively, the quotas may correspond to blocks/chunks of authorized data transmissions that are debited for with the reported data usage information.

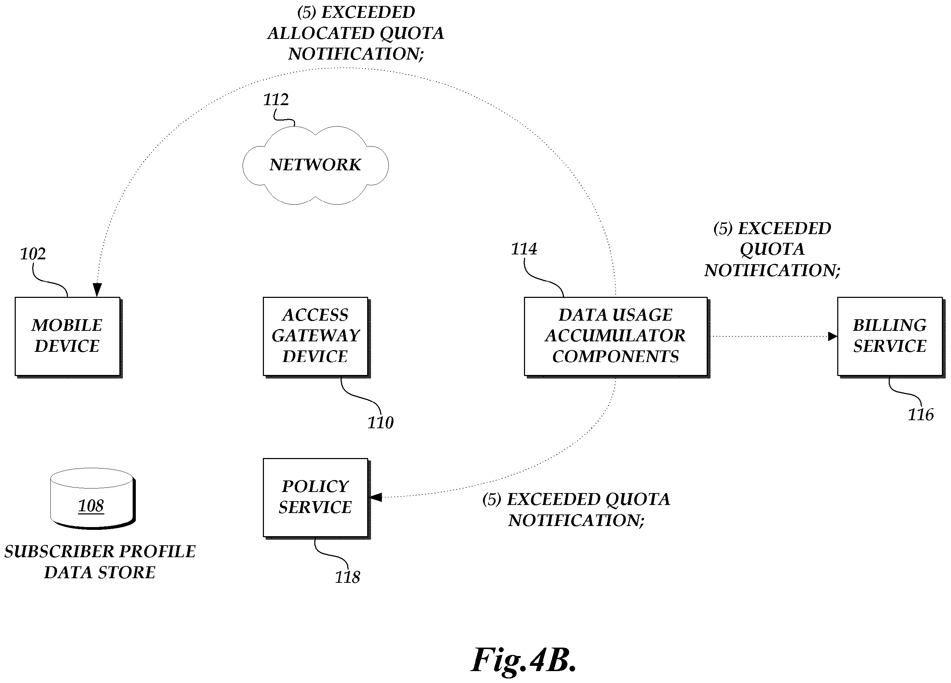

With reference now to FIGURE 4B, in an illustrative embodiment, in the event that the data usage accumulator components 114 determines that one or more quotas have been depleted, the data usage accumulator components 114 can generate notifications or initiate additional action. In one aspect, the data usage accumulator components 114 can transmit one or more notifications to the telecommunications-based device 102 to inform the subscriber of the depleted quotas. For example, the data usage accumulator components 114 can generate an SMS message or e-mail message that is transmitted to the telecommunications-based device 102. In another aspect, the data usage accumulator components 114 can transmit a notification to the billing service 116. Illustratively, the billing service 116 can modify the billings to the subscriber data plan or interface with the subscriber relative to the depleted quota. In another example, the billing service 116 may be interrogated to determine whether the subscriber plan can be allocated additional data usage quota. In a further aspect, the data usage accumulator components 114 can transmit a notification to, or otherwise initiate, the policy service 118 to modify the data access policy associated with the subscriber. For example, the policy service 118 may update a configuration to the access gateway computing device 110 to limit the data bandwidth made available to the telecommunications-based device 102.

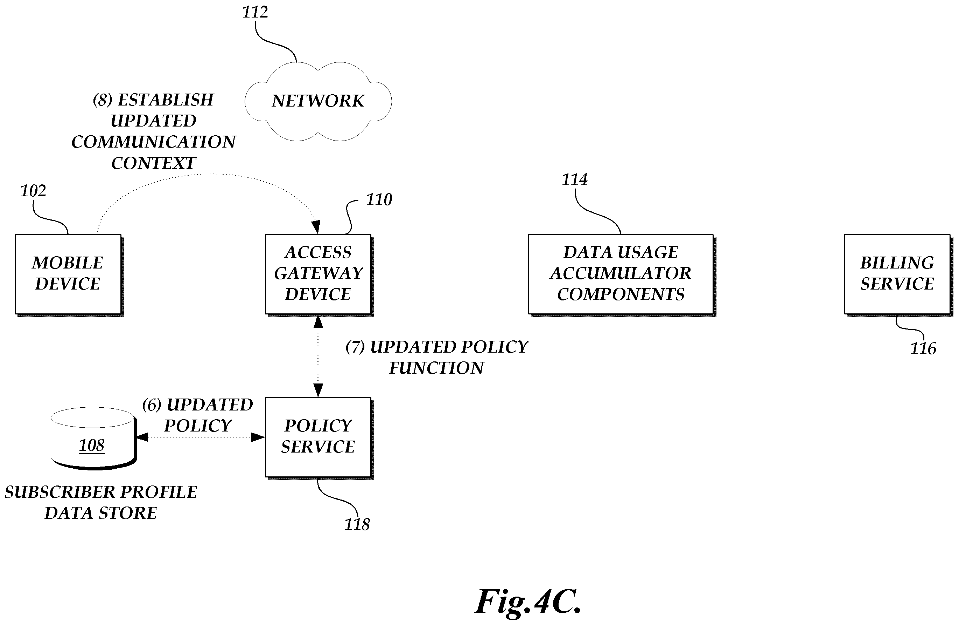

With reference now to FIGURE 4C, the policy service 118 processes the notification (or initiation request) from the data usage accumulator components 114. The policy service 118 can access the current subscriber data policy that was used to establish the current communication context and modify the data policy to reflect the depleted data usage quota. The policy service 118 then causes the updated policy to be transmitted to an appropriate access gateway computing device 110 for implementation. Thereafter, the receiving access gateway computing device 110 can request that the telecommunications-based device 102 re-transmit the context request to the mobility management anchor computing device 106 to allow the access gateway computing device 110 to implement the updated policy. One skilled in the relevant art will appreciate that additional or alternative methodologies for implementing policy changes may also be implemented.

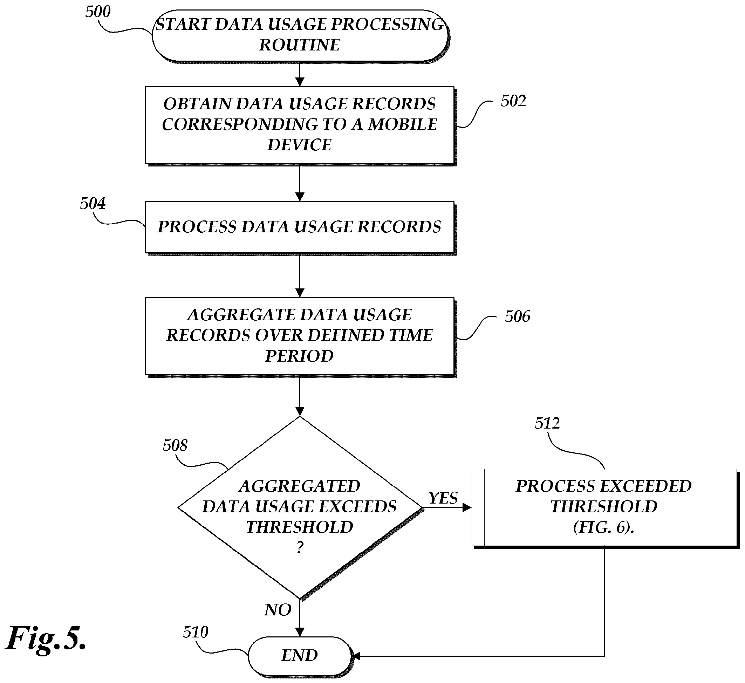

Turning now to FIGURE 5, a data usage processing routine 500 implemented by data usage accumulator components 114 (or other gateway computing device) for processing data usage records will be described. At block 502, the data usage accumulator components 114 obtains data usage records corresponding to a telecommunications-based device 102. Illustratively, the data usage records may be transmitted to the data usage accumulator components 114 by an access gateway computing device 110 periodically (e.g., batch transmission), synchronously with the creation of the data usage record, or responsive to a request from the data usage accumulator components 114.

At block 504, the data usage accumulator components 114 processes the data usage records. In one aspect, the data usage accumulator components 114 can maintain incoming data usage records on a per session basis such that the data usage accumulator components 114 considers all data usage records associated with a particular data session at the same time. In another aspect, the data usage accumulator components 114 can filter or omit data usage records related to whitelist communications. Additionally, the data usage accumulator components 114 can apply any type of criteria that facilitates the filtering of data usage records according to address (e.g., IP address), content or the like.

At block 506, the data usage accumulator components 114 aggregates the data usage records over a defined time period. Examples of time period can be based on calendar, billing cycles, projects, events, and the like. Additionally, the data usage accumulator components 114 can aggregate the data usage records multiple times to create multiple pieces of aggregated data usage information. For example, the data usage accumulator components 114 can generate or updated aggregated weekly data usage information, monthly data usage information, project-based data usage information and yearly data usage information from the same incoming data usage records.

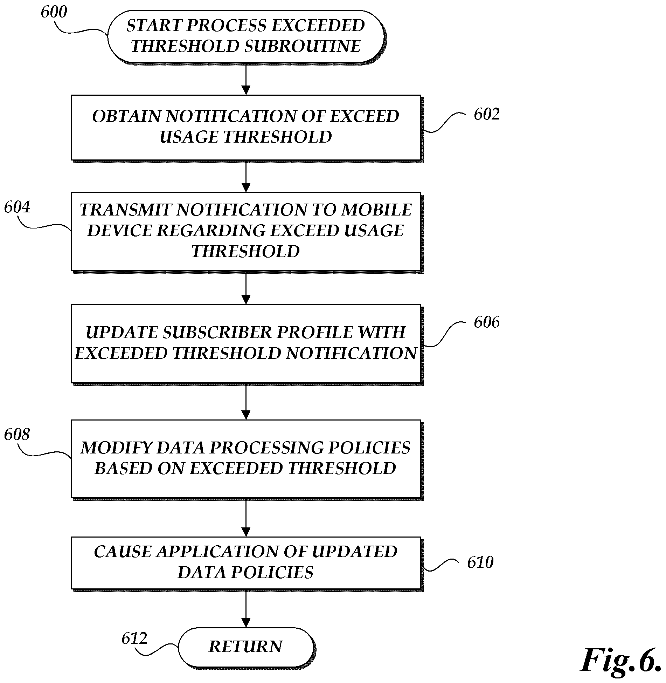

At decision block 508, a test is conducted to determine whether one or more data usage thresholds have been exceeded. As previously discussed, the data usage thresholds can corresponds to one or more data usage thresholds associated with specific subscribers, groups of subscribers, all users, and the like. If no data usage thresholds have been exceed, the routine 500 terminates at block 510. Alternatively, if at least one data usage threshold has been exceeded, at block 512, the data usage accumulator components 114 process the exceeded threshold. An illustrative sub-routine for processing exceeded thresholds will be described with regard to FIGURE 6. The routine 500 then terminates.

Turning now to FIGURE 6, a process exceeded threshold subroutine 600 implemented by the data usage accumulator components 114 (or other gateway computing device) will be described. At block 602, the data usage accumulator components 114 obtains a notification/indication/result that one or more thresholds have been exceeded (or quota has been depleted). At block 604, the data usage accumulator components 114 transmits one or more notifications regarding the exceeded threshold (or depleted quota). In one aspect, the data usage accumulator components 114 can transmit a notification to one or more telecommunications-based device 102 indicative of the exceeded threshold. The telecommunications-based device 102 can correspond to the subscriber account/plan. The telecommunications-based device 102 can also correspond to an administrator of the subscriber account/plan. In another aspect, the data usage accumulator components 114 data usage accumulator components 114can transmit a notification to the billing service 116 to facilitate the update of the subscriber plan or recording of the exceeded threshold (or depleted quota) in account history.

At block 608, the policy service 118 (as caused by the data usage accumulator components 114) modifies the data processing policies associated with the subscriber. In one embodiment, the data processing policies can be modified to modify the throughput of any future data communications associated with the subscriber plan for a period of time. In another embodiment, the data processing policies can be modified to deny/reject any subsequent data requests, for at least a period of time, or until some additional action is made by the subscriber. In a further embodiment, the data processing policies can be modified such that the telecommunications-based device 102 will be associated with a different access gateway computing device 110 for future data communications (e.g., a access gateway computing device 110 configured with a different level/quality of service. At block 610, the policy service 118, access gateway computing device 110, mobility management anchor computing device 106, or other gateway computing device can cause the application of the updated data processing policy. In an illustrative embodiment, the gateway computing device can cause the telecommunications-based device 102 to request a re-establishment of the communication context (or the generation of a new communication context request). With the re-establishment, the access gateway computing device 110 can implement the updated data processing policy. At block 612, the sub-routine returns.

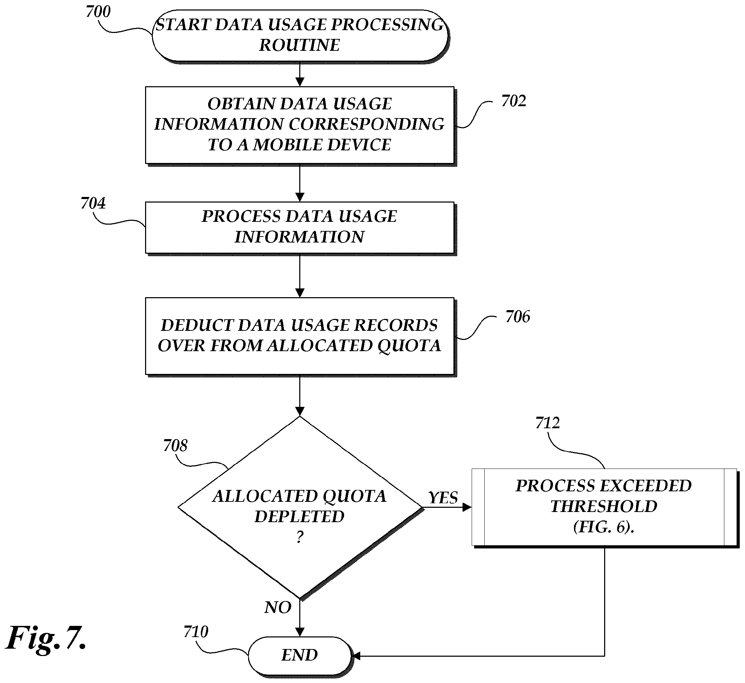

Turning now to FIGURE 7, another data usage processing routine 700 implemented by data usage accumulator components 114 (or other gateway computing device) for processing data usage information will be described. At block 702, the data usage accumulator components 114 obtains data usage information corresponding to a telecommunications-based device 102. Illustratively, the data usage information may be transmitted to the data usage accumulator components 114 by an access gateway computing device 110 synchronously with the creation of the data usage information, or responsive to a request from the data usage accumulator components 114. In this embodiment, the transmission of the data usage information is approximate to a real-time or substantially real-time processing of data usage.

At block 704, the data usage accumulator components 114 processes the data usage information. In one aspect, the data usage accumulator components 114 can filter or omit data usage information related to whitelist communications. Additionally, the data usage accumulator components 114 can apply any type of criteria that facilitates the filtering of data usage information according to address (e.g., IP address), content or the like. At block 706, the data usage accumulator components 114 debit the data usage information from one or more allocation data usage quotas. Illustratively, the data usage accumulator components 114 can debit the data usage information multiple times against multiple allocated data usage quotas. For example, the data usage accumulator components 114 can debit an allocated weekly data usage quota, an allocated monthly data usage quota, a group data usage quota, and the like.

At decision block 708, a test is conducted to determine whether one or more data usage quotas have been depleted. As previously discussed, the data usage quotas can corresponds to one or more data usage quotas associated with specific subscribers, groups of subscribers, all users, and the like. If no data usage quotas have been depleted, the routine 700 terminates at block 710. Alternatively, if at least one data usage quota has been depleted, at block 712, the data usage accumulator components 114 process the depleted data usage quota. An illustrative sub-routine for processing depleted usage quotas was previously described with regard FIGURE 6. Examples of the processing of depleted data usage quotas, include, but are not limited to, interfacing with the billing service 116 to obtain more data usage quotas, generating various notifications regarding the depleted data usage quotas, and the like. The routine 700 then terminates.

All of the processes described herein may be embodied in, and fully automated via, software code modules executed by one or more general purpose computers or processors. The code modules may be stored in any type of computer-readable medium or other computer storage device. Some or all the methods may alternatively be embodied in specialized computer hardware. In addition, the components referred to herein may be implemented in hardware, software, firmware or a combination thereof. As such, reference in the disclosure to actions performed by a module or component relates to the execution of executable instructions by a processing device, or devices, to cause the referenced action to be preformed.

Conditional language such as, among others, "can," "could," "might" or "may," unless specifically stated otherwise, are otherwise understood within the context as used in general to convey that certain embodiments include, while other embodiments do not include, certain features, elements and/or steps.

Any process descriptions, elements or blocks in the flow diagrams described herein and/or depicted in the attached figures should be understood as potentially representing modules, segments, or portions of code which include one or more executable instructions for implementing specific logical functions or elements in the process. Alternate implementations are included within the scope of the embodiments described herein in which elements or functions may be deleted, executed out of order from that shown, or discussed, including substantially concurrently or in reverse order, depending on the functionality involved as would be understood by those skilled in the art.

Modifications are intended to be included herein within the scope of the following claims.

## Claims

1. A computer-implemented method for managing communication in a communication network, comprising:
obtaining, by a mobility management anchor component (106), a communication request from a mobile device, the communication request corresponding to a request to initiate a communication context with the communication network;
causing establishment of the communication context with the mobile device in accordance with data usage policies associated with the mobile device;
obtaining, by a data usage accumulator component (114), from at least one access gateway (110) that provides data connectivity to the communication network, said data usage information corresponding to data that the mobile device exchanged via the communication network and to one or more data usage records;
determining, by a data usage accumulator component, whether to modify the data usage policies based on the data usage information; and
transmitting, by a policy service (118), the updated data usage policies to the at least one access gateway, which causes establishment of a new communication context with the mobile device in accordance with the updated data usage policies;
wherein determining whether to modify the data usage policies based on the data usage information includes determining whether to modify the data usage policies to reduce a throughput associated with subsequent data transmissions associated with the mobile device.

2. The computer-implemented method as recited in Claim 1, wherein obtaining the data usage information includes accumulating data usage records on a per session basis, the method further comprising processing the data usage records.

3. The computer-implemented method as recited in Claim 2, wherein processing the data usage records includes removing data usage records corresponding to an identified source.

4. The computer-implemented method as recited in Claim 1 further comprising aggregating data usage records for a period of time, wherein determining whether to modify the data usage policies based on the data usage information includes at least one of determining whether the aggregated data usage records exceed at least one data usage threshold and determining whether the aggregated data usage records exceed at least one of multiple data usage thresholds.

5. The computer-implemented method as recited in Claim 1, wherein determining whether to modify the data usage policies based on the data usage information includes determining whether to modify the data usage policies to identify at least one alternative gateway computing device utilized to interface with the communication network.

6. The computer-implemented method as recited in Claim 1 further comprising debiting at least one data usage allocation in accordance with the data usage information, wherein determining whether to modify the data usage policies based on the data usage information includes determining whether the data usage allocation has been depleted.

7. The computer-implemented method as recited in Claim 1 further comprising causing the transmission of at least one notification based on a determination to modify the data usage policies, wherein causing the transmission of at least one notification includes at least one of causing the transmission of at least one notification to the mobile device and causing the transmission of at least one notification to a billing service.

8. A computer-implemented method for managing communication in a communication network, comprising:
obtaining, by a mobility management anchor component (106), a communication request from a mobile device, the communication request corresponding to a request to initiate a communication context with the communication network;
causing establishment of the communication context with the mobile device in accordance with data usage policies associated with the mobile device;
obtaining, by a data usage accumulator component (114), from at least one access gateway (110) that provides data connectivity to the communication network, data usage information corresponding to data that the mobile device exchanged via the communication network, and to one or more data usage records;
processing, by the data usage accumulator component, the data usage information;
determining, by the data usage accumulator component, whether to modify the data usage policies based on the processed data usage information;
causing transmission of at least one notification based on a determination to modify the data usage policies;
causing, by a policy service (118), the modification of the data usage policies, and the transmission of the updated data usage policies to the at least one access gateway (110); and
causing establishment of a new communication context with the mobile device in accordance with updated data usage policies associated with the mobile device;
wherein causing the modification of the data usage policies includes specifying a reduction in a throughput associated with subsequent data transmissions associated with the mobile device.

9. The computer-implemented method as recited in Claim 8, wherein processing the data usage information includes removing data usage records corresponding to an identified source.

10. The computer-implemented method as recited in Claim 9 further comprising aggregating data usage records for a period of time, wherein determining whether to modify the data usage policies based on the data usage information includes at least one of determining whether the aggregated data usage records exceed at least one data usage threshold and determining whether to modify the data usage policies based on the data usage information includes determining whether the aggregated data usage records exceed at least one of multiple data usage thresholds.

11. The computer-implemented method as recited in Claim 8, wherein causing the modification of the data usage policies includes specifying at least one alternative gateway computing device utilized to interface with the communication network.

12. The computer-implemented method as recited in Claim 8 further comprising debiting at least one data usage allocation in accordance with the data usage information, wherein determining whether to modify the data usage policies based on the data usage information includes determining whether the data usage allocation has been depleted.

13. A system for managing communication in a communication network, comprising:
a mobility management anchor component (106) configured to obtain communication requests from one or more mobile devices;
at least one access gateway (110) configured to facilitate communication between the one or more mobile devices and the communication network and to generate data usage information corresponding to data that the one or more mobile devices exchanged via the communication network and to one or more data usage records;
a data usage accumulator component (114) configured to obtain and process the data usage information from the at least one access gateway and to determine whether to modify the data usage policies in accordance with the processed data usage information; and
a policy service (118) configured to cause the modification of the data usage policies, and the transmission of the updated usage policies to the at least one access gateway wherein the data usage accumulator component is configured to process the data usage records, wherein the data usage accumulator component is configured to process the data usage records to remove data usage records corresponding to an identified source or aggregate data usage records for a period of time;
wherein said determination whether to modify the data usage policies includes determining whether to modify the data usage policies to reduce a throughput associated with subsequent data transmissions associated with the mobile device, and wherein the policy service is configured to modify said data usage policies.

14. The system as recited in Claim 13, wherein the data usage accumulator component is configured to determine whether to modify the data usage policies based on the data usage information by determining at least whether the aggregated data usage records exceed at least one data usage threshold or whether the aggregated data usage records exceed at least one of multiple data usage thresholds.

15. The system as recited in Claim 13, wherein the policy service is configured to modify the data usage policies to identify at least one alternative gateway computing device utilized to interface with the communication network.

## Patentansprüche

1. Computerimplementiertes Verfahren zum Verwalten der Kommunikation in einem Kommunikationsnetz (104), das umfasst:
Erhalten, durch eine Mobilitätsverwaltungsankerkomponente (106), einer Kommunikationsanfrage von einem Mobilgerät, wobei die Kommunikationsanfrage einer Anfrage zum Initiieren einer Kommunikationsverbindung mit dem Kommunikationsnetz entspricht;
Veranlassen der Herstellung der Kommunikationsverbindung mit dem Mobilgerät gemäß Datenverwendungsrichtlinien, die zu dem Mobilgerät gehören;
Erhalten, durch eine Datenverwendungssammelkomponente (114), von wenigstens einem Zugangsgateway (110), das Datenkonnektivität mit dem Kommunikationsnetz bereitstellt, der Datenverwendungsinformationen entsprechend Daten, die das Mobilgerät über das Kommunikationsnetz ausgetauscht hat, und einer oder mehreren Datenverwendungsaufzeichnungen;
Bestimmen, durch eine Datenverwendungssammelkomponente, ob die Datenverwendungsrichtlinien auf der Grundlage der Datenverwendungsinformationen zu ändern sind; und
Senden, durch einen Richtliniendienst (118), der aktualisierten Datenverwendungsrichtlinien an das wenigstens eine Zugangsgateway, was die Herstellung einer neuen Kommunikationsverbindung mit dem Mobilgerät gemäß den aktualisierten Datenverwendungsrichtlinien veranlasst;
wobei das Bestimmen, ob die Datenverwendungsrichtlinien auf der Grundlage der Datenverwendungsinformationen zu ändern sind, das Bestimmen umfasst, ob die Datenverwendungsrichtlinien zu ändern sind, um einen Durchsatz zu reduzieren, der zu nachfolgenden Datenübertragungen gehört, die zu dem Mobilgerät gehören.

2. Computerimplementiertes Verfahren nach Anspruch 1, wobei das Erhalten der Datenverwendungsinformationen das Sammeln von Datenverwendungsaufzeichnungen auf einer Pro-Sitzung-Basis umfasst, wobei das Verfahren des Weiteren das Verarbeiten der Datenverwendungsaufzeichnungen umfasst.

3. Computerimplementiertes Verfahren nach Anspruch 2, wobei das Verarbeiten der Datenverwendungsaufzeichnungen das Entfernen von Datenverwendungsaufzeichnungen entsprechend einer identifizierten Quelle umfasst.

4. Computerimplementiertes Verfahren nach Anspruch 1, das des Weiteren das Aggregieren von Datenverwendungsaufzeichnungen für einen Zeitraum umfasst, wobei das Bestimmen, ob die Datenverwendungsrichtlinien auf der Grundlage der Datenverwendungsinformationen zu ändern sind, wenigstens eines umfasst von Bestimmen, ob die aggregierten Datenverwendungsaufzeichnungen wenigstens einen Datenverwendungsschwellenwert übersteigen, und Bestimmen, ob die aggregierten Datenverwaltungsaufzeichnungen wenigstens einen von mehreren Datenverwendungsschwellenwerten übersteigen.

5. Computerimplementiertes Verfahren nach Anspruch 1, wobei das Bestimmen, ob die Datenverwendungsrichtlinien auf der Grundlage der Datenverwendungsinformationen zu ändern sind, das Bestimmen umfasst, ob die Datenverwendungsrichtlinien zu ändern sind, um wenigstens eine alternative Gatewayrechnervorrichtung zu identifizieren, die zum Ankoppeln an das Kommunikationsnetz verwendet wird.

6. Computerimplementiertes Verfahren nach Anspruch 1, das des Weiteren das Debitieren wenigstens einer Datenverwendungszuweisung gemäß den Datenverwendungsinformationen umfasst, wobei das Bestimmen, ob die Datenverwendungsrichtlinien auf der Grundlage der Datenverwendungsinformationen zu ändern sind, das Bestimmen umfasst, ob die Datenverwendungszuweisung erschöpft ist.

7. Computerimplementiertes Verfahren nach Anspruch 1, das des Weiteren das Veranlassen der Übertragung wenigstens einer Benachrichtigung auf der Grundlage einer Bestimmung, die Datenverwendungsrichtlinien zu ändern, umfasst, wobei das Veranlassen der Übertragung wenigstens einer Benachrichtigung wenigstens eines umfasst von Veranlassen der Übertragung wenigstens einer Benachrichtigung an das Mobilgerät und Veranlassen der Übertragung wenigstens einer Benachrichtigung an einen Abrechnungsdienst.

8. Computerimplementiertes Verfahren zum Verwalten der Kommunikation in einem Kommunikationsnetz, das umfasst:
Erhalten, durch eine Mobilitätsverwaltungsankerkomponente (106), einer Kommunikationsanfrage von einem Mobilgerät, wobei die Kommunikationsanfrage einer Anfrage zum Initiieren einer Kommunikationsverbindung mit dem Kommunikationsnetz entspricht;
Veranlassen der Herstellung der Kommunikationsverbindung mit dem Mobilgerät gemäß Datenverwendungsrichtlinien, die zu dem Mobilgerät gehören;
Erhalten, durch eine Datenverwendungssammelkomponente (114), von wenigstens einem Zugangsgateway (110), das Datenkonnektivität mit dem Kommunikationsnetz bereitstellt, von Datenverwendungsinformationen entsprechend Daten, die das Mobilgerät über das Kommunikationsnetz ausgetauscht hat, und einer oder mehreren Datenverwendungsaufzeichnungen;
Verarbeiten, durch die Datenverwendungssammelkomponente, der Datenverwendungsinformationen;
Bestimmen, durch die Datenverwendungssammelkomponente, ob die Datenverwendungsrichtlinien auf der Grundlage der verarbeiteten Datenverwendungsinformationen zu ändern sind;
Veranlassen der Übertragung wenigstens einer Benachrichtigung auf der Grundlage einer Bestimmung, die Datenverwendungsrichtlinien zu ändern;
Veranlassen, durch einen Richtliniendienst (118), der Änderung der Datenverwendungsrichtlinien, und der Übertragung der aktualisierten Datenverwendungsrichtlinien an das wenigstens eine Zugangsgateway (110); und
Veranlassen der Herstellung einer neuen Kommunikationsverbindung mit dem Mobilgerät gemäß aktualisierten Datenverwendungsrichtlinien, die zu dem Mobilgerät gehören;
wobei das Veranlassen der Änderung der Datenverwendungsrichtlinien das Spezifizieren einer Reduzierung eines Durchsatzes umfasst, der zu nachfolgenden Datenübertragungen gehört, die zu dem Mobilgerät gehören.

9. Computerimplementiertes Verfahren nach Anspruch 8, wobei das Verarbeiten der Datenverwendungsinformationen das Entfernen von Datenverwendungsaufzeichnungen entsprechend einer identifizierten Quelle umfasst.

10. Computerimplementiertes Verfahren nach Anspruch 9, das des Weiteren das Aggregieren von Datenverwendungsaufzeichnungen für einen Zeitraum umfasst, wobei das Bestimmen, ob die Datenverwendungsrichtlinien auf der Grundlage der Datenverwendungsinformationen zu ändern sind, wenigstens eines umfasst von Bestimmen, ob die aggregierten Datenverwendungsaufzeichnungen wenigstens einen Datenverwendungsschwellenwert übersteigen, und das Bestimmen, ob die Datenverwendungsrichtlinien auf der Grundlage der Datenverwendungsinformationen zu ändern sind, das Bestimmen umfasst, ob die aggregierten Datenverwendungsaufzeichnungen wenigstens einen von mehreren Datenverwendungsschwellenwerten übersteigen.

11. Computerimplementiertes Verfahren nach Anspruch 8, wobei das Veranlassen des Änderns der Datenverwendungsrichtlinien das Spezifizieren wenigstens einer alternativen Gatewayrechnervorrichtung umfasst, die verwendet wird, um an das Kommunikationsnetz anzukoppeln.

12. Computerimplementiertes Verfahren nach Anspruch 8, das des Weiteren das Debitieren wenigstens einer Datenverwendungszuweisung gemäß den Datenverwendungsinformationen umfasst, wobei das Bestimmen, ob die Datenverwendungsrichtlinien auf der Grundlage der Datenverwendungsinformationen zu ändern sind, das Bestimmen umfasst, ob die Datenverwendungszuweisung erschöpft ist.

13. System zum Verwalten der Kommunikation in einem Kommunikationsnetz, das aufweist:
eine Mobilitätsverwaltungsankerkomponente (106), die dazu konfiguriert ist, Kommunikationsanfragen von einem oder mehreren Mobilgeräten zu erhalten;
wenigstens ein Zugangsgateway (110), das dazu konfiguriert ist, die Kommunikation zwischen dem einen oder den mehreren Mobilgeräten und dem Kommunikationsnetz zu erleichtern und Datenverwendungsinformationen zu erzeugen entsprechend Daten, die das eine oder die mehreren Mobilgeräte über das Kommunikationsnetz ausgetauscht haben, und einer oder mehreren Datenverwendungsaufzeichnungen;
eine Datenverwendungssammelkomponente (114), die dazu konfiguriert ist, die Datenverwendungsinformationen von dem wenigstens einen Zugangsgateway zu erhalten und zu verarbeiten, und zu bestimmen, ob die Datenverwendungsrichtlinien gemäß den verarbeiteten Datenverwendungsinformationen zu ändern sind; und
einen Richtliniendienst (118), der dazu konfiguriert ist, die Änderung der Dätenverwendungsrichtlinien zu veranlassen, und die Übertragung der aktualisierten Verwendungsrichtlinien an das wenigstens eine Zugangsgateway, wobei die Datenverwendungssammelkomponente dazu konfiguriert ist, die Datenverwendungsaufzeichnungen zu verarbeiten,
wobei die Datenverwendungssammelkomponente dazu konfiguriert ist, die Datenverwendungsaufzeichnungen zu verarbeiten, um Datenverwendungsaufzeichnungen entsprechend einer identifizieren Quelle zu entfernen oder Datenverwendungsaufzeichnungen für einen Zeitraum zu aggregieren;
wobei das Bestimmen, ob die Datenverwendungsrichtlinien zu ändern sind, das Bestimmen umfasst, ob die Datenverwendungsrichtlinien zu ändern sind, um einen Durchsatz zu reduzieren, der zu nachfolgenden Datenübertragungen gehört, die zu dem Mobilgerät gehören, und wobei der Richtliniendienst dazu konfiguriert ist, die Datenverwendungsrichtlinien zu ändern.

14. System nach Anspruch 13, wobei die Datenverwendungssammelkomponente dazu konfiguriert ist zu bestimmen, ob die Datenverwendungsrichtlinien auf der Grundlage der Datenverwendungsinformationen zu. ändern sind, wenigstens durch Bestimmen, ob die aggregierten Datenverwendungsaufzeichnungen wenigstens einen Datenverwendungsschwellenwert übersteigen, oder ob die aggregierten Datenverwendungsaufzeichnungen wenigstens einen von mehreren Datenverwendungsschwellenwerten übersteigen.

15. System nach Anspruch 13, wobei der Richtliniendienst dazu konfiguriert ist, die Datenverwendungsrichtlinien zu modifizieren, um wenigstens eine alternative Gatewayrechnervorrichtung zu identifizieren, die verwendet wird, um an das Kommunikationsnetz anzukoppeln.

## Revendications

1. Procédé mis en œuvre par ordinateur pour gérer la communication dans un réseau de communication, comprenant :
l'obtention, par un composant d'ancrage de gestion de mobilité (106), d'une demande de communication à partir d'un dispositif mobile, la demande de communication correspondant à une demande pour initier un contexte de communication avec le réseau de communication ;
le déclenchement de l'établissement du contexte de communication avec le dispositif mobile conformément aux politiques d'utilisation des données associées au dispositif mobile ;
l'obtention, par un composant accumulateur d'utilisation de données (114), à partir d'au moins une passerelle d'accès (110) qui fournit une connectivité de données au réseau de communication, desdites informations d'utilisation de données correspondant à des données que le dispositif mobile a échangées via le réseau de communication et à un ou plusieurs enregistrements d'utilisation de données ;
la détermination, par un composant accumulateur d'utilisation de données, s'il faut modifier les politiques d'utilisation des données sur la base des informations d'utilisation de données ; et
la transmission, par un service de politiques (118), des politiques d'utilisation des données mises à jour à l'au moins une passerelle d'accès, ce qui déclenche l'établissement d'un nouveau contexte de communication avec le dispositif mobile conformément aux politiques d'utilisation des données mises à jour;
dans lequel la détermination s'il faut modifier les politiques d'utilisation des données sur la base des informations d'utilisation de données comprend la détermination s'il faut modifier les politiques d'utilisation des données pour réduire un débit associé aux transmissions de données ultérieures associées au dispositif mobile.

2. Procédé mis en œuvre par ordinateur selon la revendication 1, dans lequel l'obtention des informations d'utilisation de données comprend l'accumulation d'enregistrements d'utilisation de données sur une base « par session », le procédé comprenant en outre le traitement des enregistrements d'utilisation de données.

3. Procédé mis en œuvre par ordinateur selon la revendication 2, dans lequel le traitement des enregistrements d'utilisation de données comprend la suppression des enregistrements d'utilisation de données correspondant à une source identifiée.

4. Procédé mis en œuvre par ordinateur selon la revendication 1, comprenant en outre l'agrégation d'enregistrements d'utilisation de données pendant une période de temps, dans lequel la détermination s'il faut modifier les politiques d'utilisation des données sur la base des informations d'utilisation de données comprend au moins une détermination parmi la détermination si les enregistrements d'utilisation de données agrégés dépassent au moins un seuil d'utilisation des données et la détermination si les enregistrements d'utilisation de données agrégés dépassent au moins l'un de multiples seuils d'utilisation des données.

5. Procédé mis en œuvre par ordinateur selon la revendication 1, dans lequel la détermination s'il faut modifier les politiques d'utilisation des données sur la base des informations d'utilisation de données comprend la détermination s'il faut modifier les politiques d'utilisation des données pour identifier au moins un autre dispositif informatique de passerelle utilisé pour s'interfacer avec le réseau de communication.

6. Procédé mis en œuvre par ordinateur selon la revendication 1, comprenant en outre le débit d'au moins une allocation d'utilisation des données conformément aux informations d'utilisation de données, dans lequel la détermination s'il faut modifier les politiques d'utilisation des données sur la base des informations d'utilisation de données comprend la détermination si l'allocation d'utilisation des données a été épuisée.

7. Procédé mis en œuvre par ordinateur selon la revendication 1, comprenant en outre le déclenchement de la transmission d'au moins une notification sur la base d'une détermination pour modifier les politiques d'utilisation des données, dans lequel le déclenchement de la transmission d'au moins une notification comprend au moins un déclenchement parmi le déclenchement de la transmission d'au moins une notification au dispositif mobile et le déclenchement de la transmission d'au moins une notification à un service de facturation.

8. Procédé mis en œuvre par ordinateur pour gérer la communication dans un réseau de communication, comprenant :
l'obtention, par un composant d'ancrage de gestion de mobilité (106), d'une demande de communication à partir d'un dispositif mobile, la demande de communication correspondant à une demande pour initier un contexte de communication avec le réseau de communication ;
le déclenchement de l'établissement du contexte de communication avec le dispositif mobile conformément aux politiques d'utilisation des données associées au dispositif mobile ;
l'obtention, par un composant accumulateur d'utilisation de données (114), à partir d'au moins une passerelle d'accès (110) qui fournit une connectivité de données au réseau de communication, d'informations d'utilisation de données correspondant à des données que le dispositif mobile a échangées via le réseau de communication, et à un ou plusieurs enregistrements d'utilisation de données ;
le traitement, par le composant accumulateur d'utilisation de données, des informations d'utilisation de données ;
la détermination, par le composant accumulateur d'utilisation de données, s'il faut modifier les politiques d'utilisation des données sur la base des informations d'utilisation de données traitées ;
le déclenchement de la transmission d'au moins une notification sur la base d'une détermination pour modifier les politiques d'utilisation des données ;
le déclenchement, par un service de politiques (118), de la modification des politiques d'utilisation des données, et la transmission des politiques d'utilisation des données mises à jour à l'au moins une passerelle d'accès (110) ; et
le déclenchement de l'établissement d'un nouveau contexte de communication avec le dispositif mobile conformément aux politiques d'utilisation des données mises à jour associées au dispositif mobile ;
dans lequel le déclenchement de la modification des politiques d'utilisation des données comprend la spécification d'une réduction d'un débit associé aux transmissions de données ultérieures associées au dispositif mobile.

9. Procédé mis en œuvre par ordinateur selon la revendication 8, dans lequel le traitement des informations d'utilisation de données comprend la suppression des enregistrements d'utilisation de données correspondant à une source identifiée.

10. Procédé mis en œuvre par ordinateur selon la revendication 9, comprenant en outre l'agrégation d'enregistrements d'utilisation de données pendant une période de temps, dans lequel la détermination s'il faut modifier les politiques d'utilisation des données sur la base des informations d'utilisation de données comprend au moins une détermination parmi la détermination si les enregistrements d'utilisation de données agrégés dépassent au moins un seuil d'utilisation des données et la détermination s'il faut modifier les politiques d'utilisation des données sur la base des informations d'utilisation de données comprend la détermination si les enregistrements d'utilisation de données agrégés dépassent au moins l'un de multiples seuils d'utilisation des données.

11. Procédé mis en œuvre par ordinateur selon la revendication 8, dans lequel le déclenchement de la modification des politiques d'utilisation des données comprend la spécification d'au moins un autre dispositif informatique de passerelle utilisé pour s'interfacer avec le réseau de communication.

12. Procédé mis en oeuvre par ordinateur selon la revendication 8, comprenant en outre le débit d'au moins une allocation d'utilisation de données conformément aux informations d'utilisation de données, dans lequel la détermination s'il faut modifier les politiques d'utilisation des données sur la base des informations d'utilisation de données comprend la détermination si l'allocation d'utilisation de données a été épuisée.

13. Système de gestion de communication dans un réseau de communication, comprenant :
un composant d'ancrage de gestion de mobilité (106) configuré pour obtenir des demandes de communication à partir d'un ou plusieurs dispositifs mobiles ;
au moins une passerelle d'accès (110) configurée pour faciliter la communication entre le ou les dispositifs mobiles et le réseau de communication et pour générer des informations d'utilisation de données correspondant aux données que le ou les dispositifs mobiles ont échangées via le réseau de communication et à un ou plusieurs enregistrements d'utilisation de données ;
un composant accumulateur d'utilisation de données (114) configuré pour obtenir et traiter les informations d'utilisation de données à partir de l'au moins une passerelle d'accès et pour déterminer s'il faut modifier les politiques d'utilisation des données conformément aux informations d'utilisation de données traitées ; et
un service de politiques (118) configuré pour déclencher la modification des politiques d'utilisation des données, et la transmission des politiques d'utilisation mises à jour à l'au moins une passerelle d'accès dans lequel le composant accumulateur d'utilisation de données est configuré pour traiter les enregistrements d'utilisation de données, dans lequel le composant accumulateur d'utilisation de données est configuré pour traiter les enregistrements d'utilisation de données pour supprimer les enregistrements d'utilisation de données correspondant à une source identifiée ou agréger des enregistrements d'utilisation de données pendant une période de temps ;
dans lequel ladite détermination s'il faut modifier les politiques d'utilisation des données comprend la détermination s'il faut modifier les politiques d'utilisation des données pour réduire un débit associé aux transmissions de données ultérieures associées au dispositif mobile, et dans lequel le service de politiques est configuré pour modifier lesdites politiques d'utilisation des données.

14. Système selon la revendication 13, dans lequel le composant accumulateur d'utilisation de données est configuré pour déterminer s'il faut modifier les politiques d'utilisation des données sur la base des informations d'utilisation de données en déterminant au moins si les enregistrements d'utilisation de données agrégés dépassent au moins un seuil d'utilisation des données ou si les enregistrements d'utilisation de données agrégés dépassent au moins l'un de multiples seuils d'utilisation des données.

15. Système selon la revendication 13, dans lequel le service de politiques est configuré pour modifier les politiques d'utilisation des données pour identifier au moins un autre dispositif informatique de passerelle utilisé pour s'interfacer avec le réseau de communication.
